# EUROPÄISCHE PATENTANMELDUNG

(11) **EP 1 662 820 A1**
(43) Veröffentlichungstag der Anmeldung: **31.05.2006**
(21) Anmeldenummer: 04028031.5
(22) Anmeldetag: 25.11.2004
(51) Int. Cl.: H04Q 7/32, H04L 29/06

(54) **Übermittlung Dienst-relevanter Zugangsinformationen bei Authentisierung eines Endgeräts an einer Zugangseinrichtung eines Telekommunikationsnetzes**

(71) Anmelder: SIEMENS AKTIENGESELLSCHAFT, 80333 München (DE)
(72) Erfinder: Leis, Peter, 82377 Penzberg (DE); Liebhart, Rainer, 86529 Schrobenhausen (DE)

(57) **Zusammenfassung**

Eine von der Art des Zugangs (Access) unabhängige Übertragung von Zugangsdaten an ein Endgerät und Übermittlung der Zugangsdaten vom Endgerät an eine Diensteinrichtung wird ermöglicht durch ein Verfahren zur Übermittlung (2./3.) von Zugangsinformatio-nen (BRAS-ID/DSLAM-ID/ATM-VC-ID, Network-ID, Country Code-ID etc.), dadurch gekennzeichnet, dass bei einer Authentisierung (1a, 1b) eines Endgerätes (Endgerät"/DSL-Modem/Client) gegenüber einer Zugangseinrichtung ("BRAS"/"AAA") eines Telekommunikationsnetzes (NGN- Core-Netz) das Endgerät ("Endgerät"/"Client") eine Nachricht (2) mit Zugangsinformationen empfängt und speichert, und dass das Endgerät ("Endgerät"/"Client") bei einer späteren Kontaktierung ("SIP-Notruf-Invite"/3.) einer Diensteinrichtung ("CSCF" und/oder "Notrufzentrale 2") zumindest einen Teil dieser Zugangsinformationen sendet (3).

## Beschreibung

Die Erfindung betrifft Verfahren und Vorrichtungen zur Übermittlung von Zugangsinformationen.

Zellulare Mobilfunknetze wie 2G- und 3G-Mobilfunknetze sind dem Fachmann aus den beispielsweise unter www.etsi.org und www.3GPP.com erhältlichen Standards bekannt.

Innerhalb der Organisation ETSI TISPAN wird zur Zeit das Next Generation Network NGN definiert. Das NGN ist ein IP-basiertes Netz, das den Teilnehmern Multimediadienste (Voice, Video, Chat, Messaging, Gaming) bereitstellt und auf längere Sicht die bestehenden TDM- Netze der Festnetzbetreiber ablösen soll. Das von 3GPP definierte Internet Protocol Multimedia Subsystem IMS (basierend auf SIP) soll dabei als Basis für die Session und Call Control Layer übernommen werden. Bestimmte Dienste müssen dabei bis zu einem gewissen Grade über Location Informationen (einen Ort repräsentierende Informationen) bzw. Ursprungsinformationen der A-Seite (Endgerät-Seite) verfügen, um ihre Dienste bestmöglich anbieten zu können (ortsgebundene Ansagen, Spiele, Newsräume, etc.). Zusätzlich muss z.B. bei einem Notruf das Netz den Ursprung des Teilnehmers berücksichtigen, um zum zuständigen Notrufzentrum routen zu können.

Informationen wie Mobile Country Code, Mobile Network Code, Cell Id können bereits im zellularen Mobilfunk (GSM, GPRS, UMTS) über die Funkschnittstelle zum Endgerät gesendet werden. Das Endgerät kann diese Daten dann z.B. in der SIP Signalisierung (oder einer anderen Signalisierung auf Applikationsebene) den entsprechenden Netzknoten (IMS CSCF, Application Server, etc.) zur Verfügung stellen. In einem NGN mit sehr heterogenen Zugangsnetzen wie z.B. xDSL, WLAN oder WiMax gibt es bisher keine einheitliche Prozedur dem Endgerät zugangsspezifische Informationen zukommen zu lassen, die das Endgerät dann bei Bedarf im Kontext verschiedener Applikationen verwenden kann.

Ein Ziel ist es, einen einheitlichen und access- unabhängigen Mechanismus zu definieren, mit dem das Zugangsnetz access-spezifische Informationen dem Endgerät übermitteln kann. Das Endgerät ist damit in der Lage diese Informationen auf Applikationsebene in entsprechende Signalisierungsnachrichten (z.B. SIP Nachrichten) einzufügen. Dies bedeutet, dass das Endgerät die access- spezifischen Informationen mittels einer Signalisierung der "unteren Schichten" (d.h. unterhalb des IP- Layers) erhält und diese dann in das Applikationsprotokoll einfügt.

Eine bei ETSI TISPAN diskutierte Lösung geht davon aus, dass das Endgerät vom Zugangsnetz i.a. keine ursprungsspezifischen Informationen erhält, sondern diese Informationen durch den ersten SIP Proxy (den so genannten outbound Proxy, im IMS ist dies die P-CSCF) in die SIP Signalisierung (z.B. einen eigenen SIP Header) eingefügt wird. Dieser Vorschlag hat mehrere Nachteile:
- dies widerspricht der SIP Regel, dass ein Proxy keine endto-end SIP Header modifizieren bzw. aufsetzen darf;
- der SIP Proxy hat nur sehr eingeschränkte Ursprungsinformationen zu Verfügung (z.B. network id und country code), access-spezifische Daten wie eine ATM Virtual Channel Id oder UMTS Cell Id kennt er nicht;
- der Betreiber des Netzes, in dem der SIP Proxy steht, muß nicht notwendigerweise identisch mit dem Zugangsnetzbetreiber sein;
- diese Informationen stehen nur für IMS Applikationen zur Verfügung, die SIP als Transportprotokoll verwenden, allen anderen Anwendungen sind a priori diese Daten nicht zugänglich; man müsste daher entweder für verschiedene Anwendungen verschiedene Mechanismen definieren oder der outbound Proxy muss seine Informationen über eine neue Schnittstelle einer zentralen Funktion übermitteln, die diese Informationen dann an andere Anwendungen weitergeben kann.

Eine Aufgabe der vorliegenden Erfindung ist es, zu ermöglichen, dass unabhängig vom Typ des vom Mobilfunkendgerät gerade benutzten Zugangsnetzes (zellularer Mobilfunk unterschiedliche Standards, WLAN, DSL, WIMAX, ATM etc.) oder der verwendeten Übertragungstechnologie dem Mobilfunkendgerät Zugangsinformationen zur Verfügung zu stellen, die dieses später in einer Anmeldung und/oder Authentisierung gegenüber einer einen Dienst/Service anbietenden Diensteinrichtung eines Telekommunikationsnetzes der Diensteinrichtung senden kann. Die Aufgabe wird jeweils durch die Gegenstände der unabhängigen Ansprüche gelöst.

Die Erfindung erlaubt es, auch dann wenn einem Mobilfunkendgerät unterschiedliche Telekommunikationsnetze (wie beispielsweise Festnetz/2G Mobilfunkendgerät oder 3G Mobilfunknetz unterschiedliche Standards, DSL, WIMAX etc.) und/oder unterschiedliche Telekommunikationsnetzübertragungsverfahren (ATM etx.) zur Verfügung stehen, dem Mobilfunkendgerät bei einer Zugangsauthentisierung (access authentication) für unterschiedliche Telekommunikationsnetz-Zugänge (2G/3G/WLAN etc.) und/oder Übertragungsverfahren (ATM etc.) relevante Zugangsinformationen (wie beispielsweise country code = Ländercode, network ID = Netzwerkidentität, DSLAM location insbesondere für DSL/WIMAS, ATM Kanalidentitätsinformationen ATM-VC-ID, B-RASID, WLAN access point) etc. zu übertragen, die Mobilfunkendgerät- seitig (z.B. im Endgerät oder in einer mobilfunkendgerätseitigen Karte) gespeichert und später z.B. bei einer Kontaktierung/Authentisierung/einen Rufaufbau zu einer einen Dienst anbietenden Diensteinrichtung (CSCF/Notrufzentrale etc.) dieser (CSCF/Notrufzentrale) übersandt werden können. Insbesondere können Mobilfunkendgeräte auch bei einer access- Authentisierung (gegenüber einem AAA-Server = Authentisierungs-, Autorisierungs-, Accounting- Server) Daten (die beispielsweise Mobilfunkendgerät-/Identifikationskartenspezifisch für ein oder mehrere Netze und/oder ein oder mehrere Informationsübertragungsverfahren gespeichert werden können) übertragen bekommen und gegebenenfalls bei der Kontaktierung eines Services über ein Telekommunikationsnetz (2G/3G/WLAN/WIMAX) und/oder eine Übertragungstechnologie (ATM etc.) die für dieses Netz und/oder Übertragungsverfahren relevanten gespeicherten Daten an die den Dienst anbietende Diensteinrichtung (CSCF etc.) übertragen (beispielsweise in einer Verbindungsaufbaunachricht wie einer SIP-Nachrichtinsbesondere in einem SIP- Nachrichten-Header).

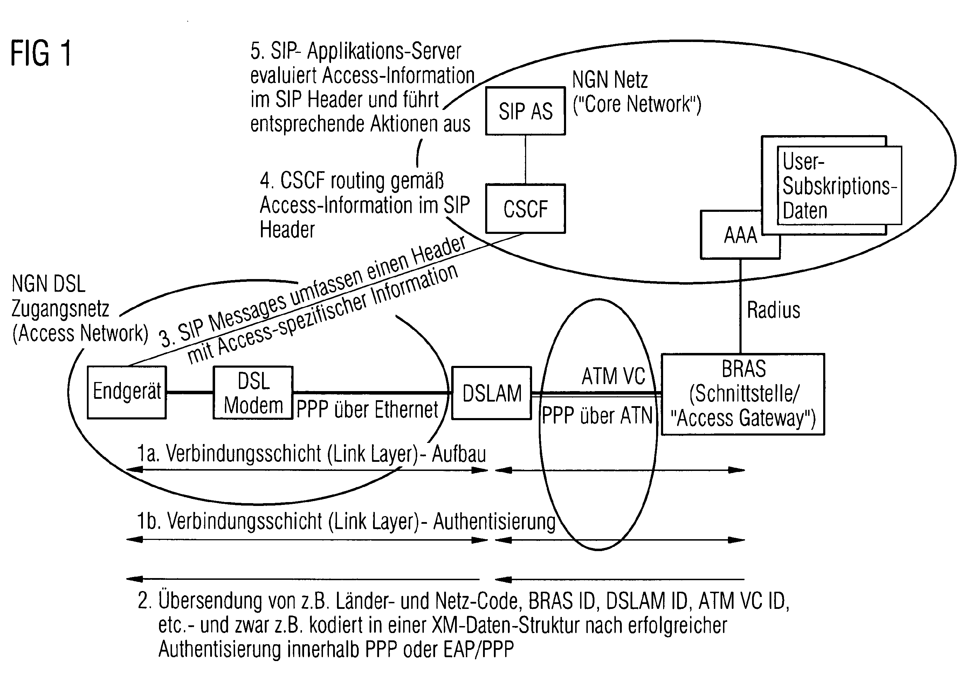

Vorzugsweise erhält das Mobilfunkendgerät bei einer Authentisierung des Endgerätes (beispielsweise über ein Mobilfunknetz oder WLAN oder ein anderes Netz) von einem Authentisierungsserver eines Netzwerkes Zugangsinformationen (BRASID, DSLAMID, ATMVCID, Ländercode / country code, Netzwerkidentität / Network ID, DSLAM location etc.), die es davon unabhängig bei einer späteren Gelegenheit zur Inanspruchnahme eines Dienstes bei der Aufbausignalisierung (Fig. 1 / 3. / SIP etc.) einer Diensteinrichtung desselben oder eines anderen Netzwerkes übersendet.

Weitere Merkmale und Vorteile der Erfindung ergeben sich aus der nachfolgenden Beschreibung eines Ausführungsbeispiels anhand der Zeichnung. Dabei zeigt
- Fig. 1: schematisch die Übertragung von Zugangsinformationen an ein Endgerät bei einer Authentisierung und die Übertragung einiger derart erhaltener Zugangsinformationen vom Endgerät an eine später von ihm kontaktierte Diensteinrichtung,
- Fig. 2: als Ablaufdiagramm schematisch für ein Ausführungsbeispiel Schritte bei der Übertragung von Zugangsinformationen bei der Authentisierung und bei einer späteren Kontaktierung einer Notruf-Diensteinrichtung.

Figur 1 zeigt beispielhaft einen AAA-Server (Authentisierung / Autorisierung / Abrechnung - Server) mit Zugriff auf einen Speicher für teilnehmerspezifische (Endgerät- spezifische bzw. Teilnehmeridentifikationskarten- spezifische) Daten eines Mobilfunknetzes, welcher AAA-Server über einen Netzzugangsserver (BRAS = broadband remote access server = Breitband-Fernzugangsserver) und eine DSLAM-Einrichtung und ein DSL Modem zur Authentisierung mit einem Endgerät (client) in Verbindung steht und diesem Zugangsinformationen betreffend den Zugang über ein oder mehrere Zugangswege (2G/3G/WLAN etc.) und/oder Übertragungstechnologien (ATM etc.) übermittelt. Im Beispiel in Figur 1 werden nach dem Aufbau eines Verbindungslayers ("link-layer") im Schritt 1a zwischen dem Endgerät (client / DSL Modem) und dem AAA-Server (über DSLAM und BRAS) und einer Authentisierung des Endgerätes (client) gegenüber dem AAA-Server im Schritt 1b von einer Zugangseinrichtung (hier BRAS und/oder AAA-Server) eines Telekommunikationsnetzes Zugangsinformationen (Ländercode / Netzwerkcode, BRASID, DSLAMID, ATMVCID etc.) für das gleiche und/oder ein anderes Telekommunikationsnetz (beispielsweise zellulares Mobilfunknetz / WLAN etc.) von einer Netzugangseinrichtung (hier dem AAA-Server) im Schritt 2. übersandt. Für die Übersendung der Funkzugangsdaten im Schritt 2. wird hier das XML-Datenformat verwendet.

Es wird weiter vorgeschlagen, während der Access Authentifizierung zugangs-spezifische Daten wie Country Code, Network Id, DSLAM Location (im Falle von DSL oder WiMax), ATM VC ID, B-RAS ID oder WLAN Access Point Name (im Falle von WLAN) in einer flexibel zu definierenden XML Struktur zum Client als einfachen Text- String zu übertragen. Diese XMLcodierte Struktur ist beliebig erweiterbar und enthält Parameter, um Informationen spezifisch für alle denkbaren Zugangsnetze und deren Architektur zu transportieren.

Parameter die für ein Zugangsnetz nicht relevant sind, werden nicht belegt. Der in XML codierte Text wird abhängig von der Authentifizierungsmethode zum Endgerät gesendet. Im DSL Umfeld z.B. wird zum Aufbau einer L2 Verbindung und zur Authentisierung des Teilnehmers üblicherweise PPP/PPPoE verwendet. Innerhalb PPP/PPPoE wird der Teilnehmer vom Access Server aufgefordert sich zu authentifizieren und sendet seinen Usernamen und sein Passwort über den DSLAM zum BRAS. Der BRAS kontaktiert dann einen Radius Server, der die eigentliche Authentifzierung vornimmt. Ist diese erfolgreich verlaufen, wird dem Endgerät das Ergebnis in einem PPP Frame mitgeteilt. Dieser PPP Frame kann optional in vorhandenen Datenfeldern zusätzliche Daten, wie z.B. dem erwähnten Text String, übertragen.

Noch flexibler und allgemeiner anwendbar ist das Extensible Authentication Protocol (EAP), das z.B. über PPP/PPPoE transportiert werden kann, aber auch direkt über IEEE 802.2 (EAPoL = EAP over LAN), so dass z.B. EAP Authentifzierung für den Zugang über WLAN und WiMax Anwendung findet. Innerhalb 3GPP wurden EAP-SIM und EAP-AKA als Authentifizierungsmechanismen für den Zugang ins Mobile Core Netz über WLAN spezifiziert. EAP bietet die Möglichkeit innerhalb der Antwortnachricht auf eine erfolgreiche EAP Authentifizierung zusätzliche Informationen zum Client zu senden.

Hat der Client die access spezifischen Informationen während der Authentifizierungsphase erhalten, interpretiert er die empfangenen Bytes als XML Struktur (String) und parsed (analysiert) dann diese, um die für ihn relevanten Daten zu ermitteln. Diese Daten stehen schließlich den Anwendungen, z.B. einem SIP-basierten IMS Client, zur Verfügung um sie in Signalisierungsnachrichten auf der Anwendungsebene einzufügen. Die Access- Information wird bei der SIP Registrierung oder beim Aufbau einer SIP Session in die entsprechende SIP Signalisierungs-Nachrichten (z.B. SIP REGISTER, SIP INVITE) vom Endgerät eingefügt. Zum Transport der Access Information wird im IMS der so genannte P-Access-Network-Info Header wie in RFC 3455 definiert, benutzt. Die Definition des P-Access-Network-Info Header ist accessspezifisch und ermöglicht Erweiterungen bezüglich des Anschlusstyps und der zugehörigen Attribute (Parameter wurden bereits für GERAN, UTRAN, und WLAN gemäß 802.11a/b Standard spezifiziert). Ebenso gut können nun auch im NGN Umfeld neue Access Typen und deren zugehörige Attribute innerhalb des P-Access-Network-Info Header definiert werden.
Beispiele wären: Access Type "NGN-DSL" mit Attributen "Country Code", "Network Code", "BRAS ID", "DSLAM ID" und "ATM VC-ID";
Access Type "NGN-WLAN" mit Attributen "Country Code", "Network Code", "BRAS ID", "WLAN Access Point Name (SSID)"; Access Type "NGN-WIMAX" mit Attributen "Country Code", "Network Code", "BRAS ID", "WiMax Base Station ID".

### Vorteile des Verfahrens:

- bestehende SIP Regeln werden eingehalten, d.h. off-theshelf SIP Clients und Stacks können verwendet werden;
- für eine P-CSCF im IMS, die gemäß 3GPP Standards 23.228 und 24.229 implementiert wurde, ist das Verfahren transparent;
- access spezifische Daten stehen allen Anwendungen, die auf dem Endgerät laufen, zur Verfügung;
- Codierung der Daten als XML Struktur ist flexibel und kann im Prinzip beliebig erweitert werden;
- gängige Protokolle wie PPP/PPPoE oder EAP/PPP sind ohne weiteres in der Lage zusätzliche Daten während der Access Authentifizierung zum Endgerät zu übertragen.

Durch die Erfindung wird ein Verfahren beschrieben wie auf flexible Art und Weise access-spezifische Informationen während der Access Authentifizierung zu einem Endgerät transportiert werden können, um später verschiedenen Anwendungen zur Verfügung zu stehen. Als Beispiel für solch eine Anwendung wurde das IMS gewählt, das bereits jetzt im P-Access-Network-Info Header in der Lage ist, die GERAN oder UTRAN global Cell Id vom Endgerät zur CSCF zu senden. Die Erfindung zielt darauf ab, diesen Mechanismus im NGN Umfeld für die dort hauptsächlich betrachteten Zugangsnetz wie DSL, WLAN oder WiMax ebenfalls einsetzbar zu machen, so dass das NGN-IMS und NGN-Dienste, falls nötig, diese Informationen vom Endgerät erhalten und gegebenenfalls auswerten können.

Im folgenden Ausführungsbeispiel wird dargestellt wie sich ein DSL-Client mittels PPP bei einem BRAS im NGN authentifiziert und bei erfolgreicher Authentisierung access-spezifische Daten vom BRAS oder DSLAM empfängt. Nach Auswertung dieser Daten ist die SIP Anwendung auf dem Endgerät in der Lage in SIP Nachrichten den P-Access-Network-Info Header aufzusetzen. S-CSCF und SIP Anwendungsserver können diese Daten dann auswerten, um z.B. ortsabhängige Dienste anzubieten oder bei Notrufen zum richtigen Notrufzentrum zu routen.

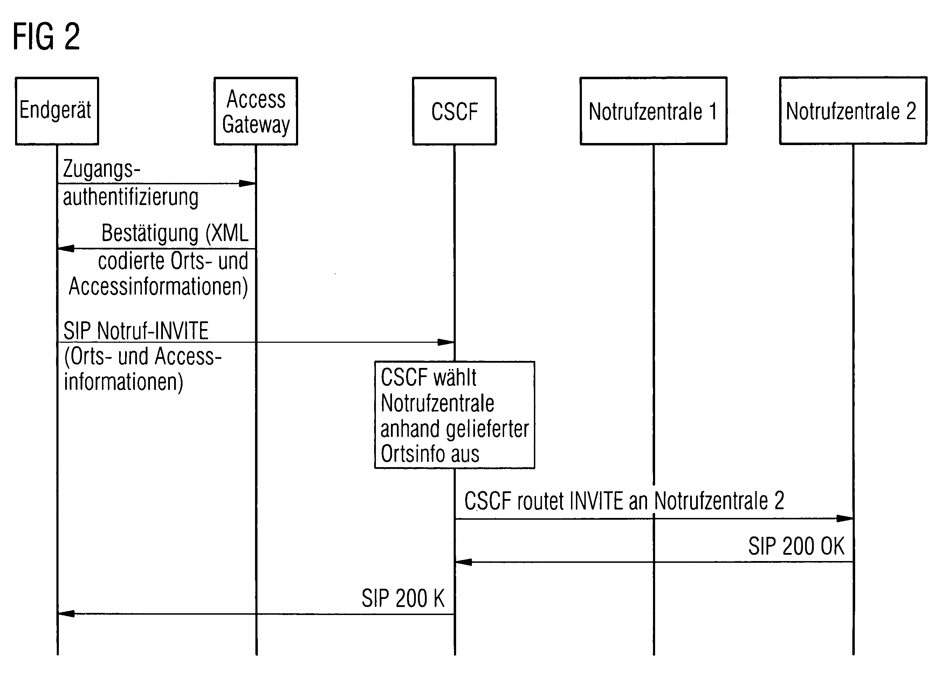

Figur 2 zeigt beispielhaft die Übertragung von Zugangsinformationen an ein Endgerät bei dessen Autorisierung gegenüber einer Zugangseinrichtung (access gateway) und die Übersendung derart übermittelter Zugangsinformationen an eine Diensteinrichtung beim Aufbau einer Verbindung für einen Notruf: Im ersten Schritt (entsprechend 1a/1b in Figur 1) beantragt das Endgerät eine Zugangsauthentisierung bei einer Zugangseinrichtung (access gateway). Die Zugangseinrichtung (access gateway) bestätigt die Authentisierung des Endgerätes in einem weiteren Schritt (entsprechend 2. in Figur 1) mit einer Bestätigung, welche überdies beispielsweise in XML kodierte Zugangsinformationen (wie Orts- und Access-Informationen etc.) enthalten kann. Wenn zu einem späteren Zeitpunkt das Endgerät einen Notruf zu einer Notrufzentrale aufbauen möchte, wird (im Schritt 3.) eine Notruf-Meldung (hier SIP-Notruf-Invite-Verbindungsaufbaubeantragungsnachricht) mit Zugangsinformationen (die das Endgerät zuvor vom der Zugangseinrichtung acces gateway in der Bestätigung 2 erhielt) an eine dienstanbietende oder dienstunterstützende Diensteinrichtung (hier CSCF) übermittelt. Die Diensteinrichtung CSCF wählt aufgrund der ihr in der SIP-Noruf-Invite-Nachricht übermittelten Zugangsinformationen die für das Endgerät geeignete (insbesondere für dessen aktuellen Ort geeignete und/oder für dessen unterstützte Übertragungsverfahren geeignete) Diensteinrichtung aus (beispielsweise die Notrufzentrale 2 in Figur 2). Die Diensteinrichtungg CSCF sendet hier auf einen Antrag (Invite) zum Aufbau einer Verbindung und/oder eines Dienstes einen Antrag an die Notrufzentrale 2 welche diesen hier in der SIP-200-OK-Nachricht an die CSCF bestätigt (Schritt 5), welche (Schritt 6) in einer SIP-200-OK-Bestätigungsnachricht dem Endgerät den Aufbau der Notrufverbindung bestätigt. Der Notrufservice kann z.B. allein in diesem Übermitteln von Daten vom Endgerät an die Notrufzentrale 2 bestehen oder überdies z.B. einen Aufbau einer Sprachverbindung umfassen etc.

Neben dem dargestellten Dienst ist auch eine Vielzahl anderet Dienste unter Verwendung des erfindungsgemäßen Verfahrens und der Vorrichtungen möglich.

## Patentansprüche

1. Verfahren zur Übermittlung (2./3.) von Zugangsinformationen (BRAS-ID/DSLAM-ID/ATM-VC-ID, Network-ID, Country-Code-ID etc.),
**dadurch gekennzeichnet, dass**
bei einer Authentisierung (1a, 1b) eines Endgerätes ("Endgerät"/DSL-Modem/Client) gegenüber einer Zugangseinrichtung ("BRAS"/"AAA") eines Telekommunikationsnetzes (NGN Core-Netz) das Endgerät ("Endgerät"/"Client") eine Nachricht (2) mit Zugangsinformationen empfängt und speichert, und dass das Endgerät ("Endgerät"/"Client") bei einer späteren Kontaktierung ("SIP-Notruf-Invite"/3.) einer Diensteinrichtung ("CSCF" und/oder "Notrufzentrale 2") zumindest einen Teil dieser Zugangsinformationen sendet (3).

2. Verfahren zur Übermittlung (2./3.) von Zugangsinformationen ,
**dadurch gekennzeichnet, dass** bei einer Authentisierung (1a, 1b) eines Endgerätes gegenüber einer Zugangseinrichtung ("BRAS") eines Telekommunikationsnetzes die Zugangseinrichtung ("BRAS") an das Endgerät ("Endgerät"/"Client") Zugangsinformationen sendet (2.)
und dass eine Diensteinrichtung ("CSCF" und/oder "Notrufzentrale 2") wenn sie später von einem Endgerät diesem bei seiner Authentisierung übersandte (2.) Zugangsinformationen erhält (3. , "CSCF" und/oder "Notrufzentrale 2") diese für die Aktivierung (4./5./6.) und/oder Ausführung eines Dienstes verwendet.

3. Verfahren nach einem der vorhergehenden Ansprüche,
**dadurch gekennzeichnet,**
**dass** die Zugangsinformationen (ATM-VC-ID) für jeweils bestimmte Übertragungsverfahren (ATM) eines Telekommunikationsnetzes und/oder bestimmte Arten von Telekommunikationsnetzen (2G/3G-Zellularmobilfunknetz, WLAN, DSL etc.) und/oder bestimmte Dienste relevante Informationen umfassen.

4. Verfahren nach Anspruch 3, **dadurch gekennzeichnet,**
**dass** die genannten bestimmten Übertragungsverfahren zellularen Mobilfunk und/oder WLAN und/oder DSL und/oder ATM umfassen.

5. Verfahren nach einem der vorhergehenden Ansprüche,
**dadurch gekennzeichnet,**
**dass** die Authentisierung (1a, 1b) eine Authentisierung des Endgerätes gegenüber einem Mobilfunknetz, insbesondere gegenüber einem zellularen Mobilfunknetz ist.

6. Verfahren nach einem der vorhergehenden Ansprüche,
**dadurch gekennzeichnet,**
**dass** die Authentisierung eine Authentisierung gegenüber einem WLAN- Netz ist.

7. Verfahren nach einem der vorhergehenden Ansprüche,
**dadurch gekennzeichnet,**
**dass** die Diensteinrichtung (CSCF) die vom Endgerät Zugangsinformationen erhält (3.) eine Diensteinrichtung ist, die anhand in den Zugangsinformationen erhaltener Daten, insbesondere Ortsdaten, entscheidet, welche weitere Diensteinrichtung ("Notrufzentrale 2") sie kontaktiert, (4.).

8. Verfahren nach einem der vorhergehenden Ansprüche,
**dadurch gekennzeichnet,**
**dass** die Diensteinrichtung ("CSCF" und/oder "Notrufzentrale 2") eine Einrichtung eines Mobilfunknetzes ist, insbesondere eine Einrichtung eines zellularen Mobilfunknetzes oder WLAN-Netzes.

9. Verfahren nach einem der vorhergehenden Ansprüche,
**dadurch gekennzeichnet,**
**dass** die Zugangsinformationen den Ort des Mobilfunkendgerätes repräsentieren.

10. Verfahren nach einem der vorhergehenden Ansprüche,
**dadurch gekennzeichnet,**
**dass** die Zugangsinformationen für ein oder mehrere Übertragungsverfahren Verbindungsinformationen betreffend die Identifikation einer Verbindung und/oder einer Vermittlungseinrichtung umfassen, insbesondere eine ATM-Pfad-Verbindungsinformation (ATM-VC-ID oder BRAS-ID oder WLAN-Access-Point-Name).

11. Verfahren nach einem der vorhergehenden Ansprüche,
**dadurch gekennzeichnet,**
**dass** die Zugangsinformationen in einer Internetseitenbeschreibungssprache, insbesondere XML, an das Endgerät gesandt werden.

12. Verfahren nach einem der vorhergehenden Ansprüche,
**dadurch gekennzeichnet,**
**dass** die Zugangsinformationen unabhängig davon, über welche Art von Telekommunikationsnetz (2G/3G/WL1/ATM) sich ein Endgerät authentisiert in einem bestimmten vorgegebenen Format an das Endgerät gesendet werden.

13. Verfahren nach einem der vorhergehenden Ansprüche,
**dadurch gekennzeichnet,**
**dass** das Endgerät in einem vorgegebenen Format erhaltene Zugangsinformationen einer Nachricht (2) entnimmt und später nur für die Inanspruchnahme eines Dienstes relevante Zugangsinformationen an eine Diensteinrichtung sendet (3) in Abhängigkeit vom Dienst und/oder vom für den Zugang zum Dienst verwendeten Telekommunikationsnetz.

14. Verfahren nach einem der vorhergehenden Ansprüche,
**dadurch gekennzeichnet,**
**dass** im Endgerät bei einer Authentisierung mit einer Nachricht (2) Zugangsinformationen betreffend unterschiedliche Netze und/oder unterschiedliche Übertragungsverfahren übertragen werden, insbesondere betreffend ein oder mehrere Typen von zellularen Mobilfunknetzen und/oder ein oder mehrere Typen von WLAN-Netzen und/oder eine ATM-Verbindung und/oder eine IP-Verbindung oder eine andere Verbindung.

15. Verfahren nach einem der vorhergehenden Ansprüche,
**dadurch gekennzeichnet,**
**dass** Zugangsdaten an das Endgerät mit einer PPP-Nachricht (2) übertragen werden.

16. Verfahren nach einem der vorhergehenden Ansprüche,
**dadurch gekennzeichnet,**
**dass** Zugangsdaten an das Endgerät mit einer Verbindungsaufbausignalisierungsnachricht, insbesondere einer SIP-Nachricht (2) übertragen werden.

17. Verfahren nach Anspruch 16,
**dadurch gekennzeichnet,**
**dass** Zugangsdaten an das Endgerät bei der Authentisierung in einem IP-Access-Network-Info-Header übertragen werden.

18. Verfahren nach einem der vorhergehenden Ansprüche,
**dadurch gekennzeichnet,**
**dass** eine Verbindungsaufbau-Anwendung, insbesondere IP-Anwendung, im Endgerät empfangene Zugangsdaten verwendet für die Erstellung einer an eine Diensteinrichtung (CSCF) zu sendenden Kontaktierungsnachricht (3.).

19. Endgerät zur Durchführung des Verfahrens nach einem der vorhergehenden Ansprüche.

20. Telekommunikationsnetz zur Durchführung des Verfahrens nach einem der vorhergehenden Ansprüche.
